# EUROPEAN PATENT APPLICATION

(11) **EP 4 322 563 A1**
(43) Date of publication of application: **14.02.2024**
(21) Application number: 22189801.8
(22) Date of filing: 10.08.2022
(51) Int. Cl.: H04W 4/14, H04W 4/90, H04W 76/50, H04W 80/10

(54) **SUPPORT OF EMERGENCY SHORT MESSAGE SERVICE MESSAGES**

(71) Applicant: Nokia Technologies Oy, 02610 Espoo (FI)
(72) Inventor: LIEBHART, Rainer, Munich (DE); LEIS, Peter, Penzberg (DE)
(74) Representative: Nokia EPO representatives

(57) **Abstract**

There are provided measures for support of emergency short message service messages. Such measures exemplarily comprise, at a session control entity in a first public land mobile network serving a terminal, receiving, from said terminal, a first message, said first message comprising an encoded short message service message and requested delivery information including general emergency destination information, analyzing said first message to determine whether said first message is an emergency message, and based on said analyzing, determining said first message is an emergency message, selecting an emergency short message service handling capable emergency session control entity in said first public land mobile network, and transmitting said first message to said emergency session control entity and further on to an emergency short message capable IP short message gateway.

## Description

### Field

Various example embodiments of the present disclosure relate to routing of emergency short message service messages. More specifically, various example embodiments of the present disclosure relate to methods, apparatuses, systems, and computer program products for routing of emergency short message service messages in a public land mobile network.

### Background

The present disclosure generally relates to emergency short message service (SMS) messages and in particular the routing thereof via internet protocol (IP) multimedia subsystem (IMS) in a public land mobile network that are received from a user equipment when the user equipment is both roaming and not roaming.

For IMS emergency multimedia sessions, such as voice/video calls, when a user equipment (UE) is roaming, a local emergency call session control function (E-CSCF) is selected that routes emergency voice/video calls to a local public safety answering point (PSAP) and invokes location services of a location function to determine the location of the user equipment (UE)) from which the voice/video call originated. However, routing concepts for IMS emergency voice/video calls are fundamentally different from routing concepts for short messages (SM), and therefore routing for emergency SMS is not solved in the current IMS architecture.

Namely, for routing an emergency voice/video call when a UE is roaming (i.e., the UE is a roaming UE), assuming an S8 home routing (S8HR) model is used for implementing voice over long term evolution (VoLTE) / voice over new radio (VoNR) feature, the following routing principles are applied.

According to these routing principles, a local breakout in a visited public land mobile network (VPLMN) is applied for emergency voice/video calls.

Here, according to these routing principles, the UE requests establishment of an emergency packet data network (PDN) / protocol data unit (PDU) connection in the VPLMN. A short message (SM) may be sent in a session initiation protocol (SIP) message via a normal PDN/PDU connection in the VLPMN used for IMS signaling. However, the normal PDN/PDU connection in the VPLMN can be preempted when there is congestion in the VPLMN.

Further, according to these routing principles, the UE registers to an IMS in the VPLMN, using a proxy call session control function (P-CSCF) in the VPLMN that is selected during establishment of the PDN connection (i.e., PDN connection establishment).

Further, according to these routing principles, the UE sends SIP INVITE with an emergency indication, e.g., emergency uniform resource identifier (URI) or a specific emergency number like "911" or "112".

Further, according to these routing principles, the P-CSCF detects the emergency indication in the SIP message and forwards the SIP INVITE to a local E-CSCF.

Finally, according to these routing principles, the E-CSCF may invoke location functionality of a location function of the PLMN to obtain a location of the UE and then forward the SIP INVITE towards a local PSAP. The selection of the PSAP may be based on the location of the UE.

To the contrary, for SMS routing when a UE is roaming (i.e., when a UE is a roaming UE), assuming the S8HR model as used in VoLTE/VoNR deployments, the following routing principles are applied.

According to these routing principles, a home routed model is applied for SMS.

Here, according to these routing principles, the UE requests establishment of a regular PDN/PDU connection in the VPLMN.

Further, according to these routing principles, the UE registers to an IMS in a home public land mobile network using a P-CSCF in the home public land mobile network (HPLMN).

Further, according to these routing principles, the UE sends a SIP MESSAGE (which includes the SMS in a body of the SIP MESSAGE) to the IMS in the home network (i.e., HPLMN). The SIP URI is set to the short message service center (SMSC) address of the UE which is configured in the UE by the operator of the HPLMN (i.e., the home network operator). The SMSC is located in the home network (i.e., HPLMN), i.e., all SMS messages (originating and terminating) are always routed via the SMSC in the UE's home network.

Further, according to these routing principles, the SIP MESSAGE is sent via the P-CSCF to a serving call session control function (S-CSCF) and from the S-CSCF to an internet protocol short message gateway (IP-SM-GW) in the HPLMN.

Further, according to these routing principles, the IP-SM-GW does transport layer interworking, extracts the SMS from the SIP MESSAGE, and forwards the SMS over mobile application part (MAP) or DIAMETER to the SMSC.

Finally, according to these routing principles, the SMSC extracts the destination address (transfer protocol destination address (TP-DA)) from the SMS and sends the SMS towards the terminating side that is identified by the destination address in the SMS, e.g., another UE. TP-DA uses SMS address type as defined in TS 23.040 and can carry a mobile subscriber integrated services digital network number (MSISDN) with number type 'E.164', but the type of number can also be 'unknown' (for use of e.g. "112" or "911") or 'international' (for use of e.g. "+1234567890") or 'alphanumeric' (for use of e.g. 'SOS').

These differences in routing principles between routing of an emergency voice/video call and routing of SMS messages lead to that support of routing of emergency SMS messages via an IMS in a PLMN is not provided for.

Hence, the problem arises that emergency SMS messages cannot be routed via IMS in a PLMN to a responsible (e.g. local) PSAP, at least not efficiently.

Hence, there is a need to provide for support of routing of emergency short message service messages via IMS in a PLMN to a responsible PSAP.

### Summary

Various example embodiments of the present disclosure aim at addressing at least part of the above issues and/or problems and drawbacks.

Various aspects of example embodiments of the present disclosure are set out in the appended claims.

According to an exemplary aspect, there is provided a method of a session control entity in a first public land mobile network serving a terminal, said method comprising receiving, from said terminal, a first message, said first message comprising an encoded short message service message and requested delivery information including general emergency destination information, analyzing said first message to determine whether said first message is an emergency message, and based on said analyzing, determining said first message is an emergency message, selecting an emergency short message service handling capable emergency session control entity in said first public land mobile network, and transmitting said first message to said emergency session control entity.

According to an exemplary aspect, there is provided a method of an emergency session control entity in a first public land mobile network serving a terminal, said method comprising receiving, from a session control entity in said first public land mobile network, a first message, said first message comprising an encoded short message service message, and requested delivery information including general emergency destination information, identifying said first message as being an emergency message, selecting an emergency short message service handling capable short message gateway entity in said first public land mobile network, and transmitting said first message to said short message gateway entity.

According to an exemplary aspect, there is provided a method of an emergency session control entity in a first public land mobile network serving a terminal, said method comprising receiving, from a session control entity in said first public land mobile network, a first message, said first message comprising an encoded short message service message, and requested delivery information including general emergency destination information, identifying said first message as being an emergency message, modifying said requested delivery information of said first message to include specific emergency destination information of a specific public safety answering point, and transmitting said first message to said public safety answering point.

According to an exemplary aspect, there is provided a method of a short message gateway entity in a first public land mobile network serving a terminal, said method comprising receiving, from an emergency session control entity in said first public land mobile network, a first message, said first message comprising a short message service message and requested delivery information including emergency destination information, extracting said short message service message from said first message, and setting a destination address of said short message service message to specific emergency destination information of a specific public safety answering point.

According to an exemplary aspect, there is provided an apparatus of a session control entity in a first public land mobile network serving a terminal, said apparatus comprising receiving circuitry configured to receive, from said terminal, a first message, said first message comprising an encoded short message service message and requested delivery information including general emergency destination information, analyzing circuitry configured to receive said first message to determine whether said first message is an emergency message, and based on said analyzing, determining said first message is an emergency message, selecting circuitry configured to select an emergency short message service handling capable emergency session control entity in said first public land mobile network, and transmitting circuitry configured to transmit said first message to said emergency session control entity.

According to an exemplary aspect, there is provided an apparatus of an emergency session control entity in a first public land mobile network serving a terminal, said apparatus comprising receiving circuitry configured to receive, from a session control entity in said first public land mobile network, a first message, said first message comprising an encoded short message service message, and requested delivery information including general emergency destination information, identifying circuitry configured to identify said first message as being an emergency message, selecting circuitry configured to select an emergency short message service handling capable short message gateway entity in said first public land mobile network, and transmitting circuitry configured to transmit said first message to said short message gateway entity.

According to an exemplary aspect, there is provided an apparatus of an emergency session control entity in a first public land mobile network serving a terminal, said apparatus comprising receiving circuitry configured to receive, from a session control entity in said first public land mobile network, a first message, said first message comprising an encoded short message service message, and requested delivery information including general emergency destination information, identifying circuitry configured to identify said first message as being an emergency message, modifying circuitry configured to modify said requested delivery information of said first message to include specific emergency destination information of a specific public safety answering point, and transmitting circuitry configured to transmit said first message to said public safety answering point.

According to an exemplary aspect, there is provided an apparatus of a short message gateway entity in a first public land mobile network serving a terminal, said apparatus comprising receiving circuitry configured to receive, from an emergency session control entity in said first public land mobile network, a first message, said first message comprising a short message service message and requested delivery information including emergency destination information, extracting circuitry configured to extract said short message service message from said first message, and setting circuitry configured to set a destination address of said short message service message to specific emergency destination information of a specific public safety answering point.

According to an exemplary aspect, there is provided an apparatus of a session control entity in a first public land mobile network serving a terminal, said apparatus comprising at least one processor, at least one memory including computer program code, and at least one interface configured for communication with at least another apparatus, the at least one processor, with the at least one memory and the computer program code, being configured to cause the apparatus to perform receiving, from said terminal, a first message, said first message comprising an encoded short message service message and requested delivery information including general emergency destination information, analyzing said first message to determine whether said first message is an emergency message, and based on said analyzing, determining said first message is an emergency message, selecting an emergency short message service handling capable emergency session control entity in said first public land mobile network, and transmitting said first message to said emergency session control entity.

According to an exemplary aspect, there is provided an apparatus of a session control entity in a first public land mobile network serving a terminal, said apparatus comprising at least one processor, at least one memory including computer program code, and at least one interface configured for communication with at least another apparatus, the at least one processor, with the at least one memory and the computer program code, being configured to cause the apparatus to perform receiving, from a session control entity in said first public land mobile network, a first message, said first message comprising an encoded short message service message, and requested delivery information including general emergency destination information, identifying said first message as being an emergency message, selecting an emergency short message service handling capable short message gateway entity in said first public land mobile network, and transmitting said first message to said short message gateway entity.

According to an exemplary aspect, there is provided an apparatus of a session control entity in a first public land mobile network serving a terminal, said apparatus comprising at least one processor, at least one memory including computer program code, and at least one interface configured for communication with at least another apparatus, the at least one processor, with the at least one memory and the computer program code, being configured to cause the apparatus to perform receiving, from a session control entity in said first public land mobile network, a first message, said first message comprising an encoded short message service message, and requested delivery information including general emergency destination information, identifying said first message as being an emergency message, modifying said requested delivery information of said first message to include specific emergency destination information of a specific public safety answering point, and transmitting said first message to said public safety answering point.

According to an exemplary aspect, there is provided an apparatus of a session control entity in a first public land mobile network serving a terminal, said apparatus comprising at least one processor, at least one memory including computer program code, and at least one interface configured for communication with at least another apparatus, the at least one processor, with the at least one memory and the computer program code, being configured to cause the apparatus to perform receiving, from an emergency session control entity in said first public land mobile network, a first message, said first message comprising a short message service message and requested delivery information including emergency destination information, extracting said short message service message from said first message, and setting a destination address of said short message service message to specific emergency destination information of a specific public safety answering point.

According to an exemplary aspect, there is provided a computer program product comprising computer-executable computer program code which, when the program is run on a computer (e.g. a computer of an apparatus according to any one of the aforementioned apparatus-related exemplary aspects of the present disclosure), is configured to cause the computer to carry out the method according to any one of the aforementioned method-related exemplary aspects of the present disclosure.

Such computer program product may comprise (or be embodied) a (tangible) computer-readable (storage) medium or the like on which the computer-executable computer program code is stored, and/or the program may be directly loadable into an internal memory of the computer or a processor thereof.

Any one of the above aspects enables efficient handling of emergency SMS messages under consideration of IMS utilization, allowing routing of emergency SMS messages via IMS in a PLMN to a responsible (e.g. local) PSAP, to thereby solve at least part of the problems and drawbacks identified in relation to the prior art.

By way of example embodiments, there is provided support of routing of emergency short message service messages via IMS in a PLMN to a responsible (e.g. local) PSAP. More specifically, by way of example embodiments, there are provided methods, apparatuses, systems, and computer program products for realizing support of routing of emergency short message service messages via IMS in a PLMN to a responsible (e.g. local) PSAP.

Thus, improvement is achieved by methods, apparatuses, systems, and computer program products enabling/realizing support of routing of emergency short message service messages via IMS in a PLMN to a responsible (e.g. local) PSAP.

### Brief description of the drawings

In the following, the present disclosure will be described in greater detail by way of non-limiting examples with reference to the accompanying drawings, in which
Figure 1 is a block diagram illustrating an apparatus according to example embodiments,
Figure 2 is a block diagram illustrating an apparatus according to example embodiments,
Figure 3 is a block diagram illustrating an apparatus according to example embodiments,
Figure 4 is a block diagram illustrating an apparatus according to example embodiments,
Figure 5 is a block diagram illustrating an apparatus according to example embodiments,
Figure 6 is a block diagram illustrating an apparatus according to example embodiments,
Figure 7 is a schematic diagram of a procedure according to example embodiments,
Figure 8 is a schematic diagram of a procedure according to example embodiments,
Figure 9 is a schematic diagram of a procedure according to example embodiments,
Figure 10 is a block diagram illustrating an apparatus according to example embodiments,
Figure 11 is a block diagram illustrating an apparatus according to example embodiments,
Figure 12 is a schematic diagram of a procedure according to example embodiments,
Figure 13 shows a schematic diagram of an example of a system environment with signaling variants according to example embodiments,
Figure 14 shows a schematic diagram of an example of a system environment with signaling variants according to example embodiments, and
Figure 15 is a block diagram alternatively illustrating apparatuses according to example embodiments.

### Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology which is directly related thereto. Such terminology is only used in the context of the presented non-limiting examples, and does naturally not limit the disclosure in any way. Rather, any other communication or communication related system deployment, etc. may also be utilized as long as compliant with the features described herein.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to example embodiments, in general terms, there are provided methods, apparatuses, systems, and computer program products for (enabling/realizing) support of routing of emergency short message service messages via an IMS in a PLMNM to a responsible (e.g., local) PSA.

As mentioned above, support of routing of emergency SMS messages via an IMS in a PLMNM to a responsible (e.g., local) PSA is presently not provided for, such that emergency SMS messages cannot be routed via an IMS in a PLMN to a responsible (e.g., local) PSAP.

When addressing this constraint, the following potential requirements may be considered.

On the one hand, the evolved packet system (EPS) and the 5^{th} generation system (5GS) shall route an emergency SM via IMS in a PLMN using the emergency numbers to a local emergency response center (i.e., PSAP), according to the local reg u lations.

The emergency SM shall be routed to the emergency response center serving the location where the subscriber/user (i.e., a UE) is located, and replies shall be routed back to the subscriber/user (i.e., the UE) in accordance with national reg u lations.

Further, the 3^{rd} Generation Partnership Project (3GPP) system comprising of a radio and a core network shall support an emergency SM to be routed to different emergency response centers, depending on the type of emergency.

Still further, the emergency SM to the emergency response center shall be supported by the 3GPP system without a subscriber identity module (SIM) / universal subscriber identity module (USIM) / IP multimedia services identity module (ISIM) being present.

A SM using emergency numbers such as "112" and "911" and alphanumeric strings such as "SOS" as identification are called emergency short message or emergency SMS. Still further, the emergency SM sent to the emergency response center shall be able to use the same identification methods as for emergency voice calls which are emergency numbers such as "112" and "911" and alphanumeric strings such as "SOS".

Still further, subject to local/regional regulations, it shall be possible to send an emergency SM to the emergency response center which is closest to the UE location.

Finally, support for SMS via an IMS in a PLMN for emergency service when a UE is roaming and support for emergency numbers such as "112" and "911" in short messages is to be provided.

Based on the above, the following identified demands underlie example embodiments.

Namely, on the one hand, a serving public land mobile network (PLMN) (i.e., HPLMN or VPLMN) needs to detect an emergency SMS message and select an E-CSCF in the serving PLMN.

Further, on the other hand, the E-CSCF needs to be invoked and must be capable of handling emergency SMS messages.

In addition, a proper SMSC in the serving PLMN needs to be selected.

When discussing example embodiments, a serving PLMN can be either a HPLMN or VPLMN when a UE is roaming. In addition, example embodiments refer to long term evolution (LTE) / evolved packet core (EPC) and PDN connections, however, example embodiments are also applicable to new radio (NR) / 5^{th} generation core (5GC) and PDU sessions.

The following pre-requisites may be assumed for the example embodiments.

Namely, on the one hand, a UE decides to send an emergency SMS, i.e., a SMS to a known emergency number like "911", "112", to a known service specific emergency number, or to a known emergency URI like 'SOS'.

Further, on the other hand, UE can be already registered in an IMS in a PLMN.

Still further, after the UE detects that an emergency SMS is going to be sent, the UE establishes an emergency PDN connection, i.e., a PDN connection with an indication that the PDN connection is for emergency use.

Finally, if the UE is not already registered in an IMS in PLMN, the UE performs a registration procedure to register to the IMS in the PLMN. If the UE is not equipped with an USIM, the UE performs IMS emergency registration procedure.

In brief, according to example embodiments, if the UE decides to send an emergency SMS message, i.e., an SMS to a well-known emergency number or SOS alphanumeric string via SIP signaling, the UE initiates an SIP MESSAGE which contains the SMS in a body of the SIP MESSAGE.

According to example embodiments, in the SIP MESSAGE a request uniform resource identifier (R-URI) has been set to an emergency URI. Emergency URI in this context is, for example, a telephone URI (Tel URI) containing an emergency number like "112" ("tel:112") or an SOS SIP URI like "sos.sms.fire".

According to example embodiments, the SMS message may be encoded as per existing rules defined in TS 24.011, TS 23.040. The SMS relay protocol (RP) layer destination address (relay protocol destination address (RP-DA)) is set to the provisioned SMSC address (typically an E.164 number). The SMSC is in the HPLMN. The destination address (TP-DA) on the transfer protocol (TP) layer can be set to the emergency number (e.g., "911" or "112"), and a type of address is then 'unknown', or to a string like 'SOS' or the SOS SIP URI (if this fits to the TP-DA address field), and a type of number is then 'alphanumeric'.

According to example embodiments, the P-CSCF in the serving PLMN receives the SIP MESSAGE, and based on the R-URI, the P-CSCF detects that the SIP MESSAGE is an emergency message. According to example embodiments, P-CSCF detects that the SIP MESSAGE is an emergency message by analyzing the request URI of the SIP MESSAGE. According to example embodiments, the P-CSCF the selects an E-CSCF in the serving PLMN that is capable of handling emergency messages or emergency SMS messages. Such an E-CSCF can be for example collocated with an IP-SM-GW.

According to example embodiments, further, the E-CSCF receives the SIP MESSAGE and identifies that the received SIP MESSAGE contains an emergency SMS message. According to example embodiments, the E-CSCF identifies that the SIP MESSAGE contains an emergency SMS by analyzing the request URI of the SIP MESSAGE. According to example embodiments, the E-CSCF selects an IP-SM-GW in the serving PLMN that is capable of handling emergency SMS messages. Based on national regulation the E-CSCF can invoke a location retrieval function (LRF) to retrieve location data indicative of a location of the UE.

According to example embodiments, the E-CSCF changes the R-URI of the SIP MESSAGE to an address identifier of a proper PSAP (e.g., a PSAP address of a proper PSAP) being capable of handling emergency SMS messages. The address identifier of a proper PSAP being capable of handling emergency SMS messages can be a SIP URI or a Tel URI (MSISDN address of the PSAP).

According to example embodiments, the PSAP address can depend on the location of the UE ("UE location") and location data indicative of the UE location is either locally configured in the E-CSCF or fetched (i.e., retrieved or obtained) from an external database. If the E-CSCF is not aware of PSAP addresses, according to example embodiments, the E-CSCF just adds the location data indicative of the UE location (if available) to the SIP MESSAGE.

Then, the E-CSCF forwards the SIP MESSAGE to the IP-SM-GW.

According to further example embodiments, the IP-SM-GW is not invoked but the E-CSCF, if aware of the PSAP address, forwards the SIP MESSAGE to the PSAP.

Then, the IP-SM-GW receives the SIP MESSAGE including the encoded SMS message and extracts the SMS message from the SIP MESSAGE.

If the E-CSCF has changed the R-URI of the SIP MESSAGE to the PSAP address or the address identifier of the proper PSAP that is capable of handling emergency SMS messages, according to example embodiments, the IP-SM-GW sets the destination address on the TP layer (TP-DA) to the PSAP address.

Otherwise, according to example embodiments, the IP-SM-GW selects a proper PSAP address considering the provided location data indicative of the UE location (if available).

When the UE is roaming in a VPLMN, according to example embodiments, the IP-SM-GW selects a local SMSC in the VPLMN and forwards (i.e., routes) the SM to this SMSC. In this case, the IP-SM-GW changes the SM RP layer destination address (RP-DA) to the address of the local SMSC.

Otherwise, according to example embodiments, the RP-DA contains the SMSC address in the HPLMN and the SMS can be forwarded or routed to the SMSC in the HPLMN.

According to example embodiments, also when the UE is not roaming, a special SMSC can be selected where the emergency SMS message is forwarded or routed towards.

According to further example embodiments, the SMSC is not invoked but the IP-SM-GW forwards or routes the SIP MESSAGE directly to a SIP capable PSAP (based on PSAP capabilities and national requirements).

Then, the SMS message is then sent by the IP-SM-GW via MAP or DIAMETER towards the local SMSC and from the local SMSC to a PSAP (e.g., SM carried in MAP to a mobile (services) switching center (MSC) which delivers the SM to the PSAP). Alternatively, according to example embodiments, the SMS message is sent by the IP-SM-GW directly to the PSAP embedded in a SIP MESSAGE.

If the PSAP sends a mobile terminated (MT) SMS to the UE, the MT SMS contains the MSISDN of the UE and is routed via the SMSC of the UE's HPLMN.

Example embodiments are specified below in more detail.

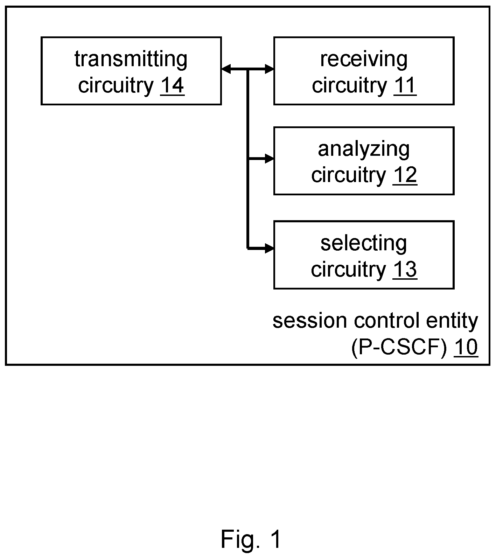

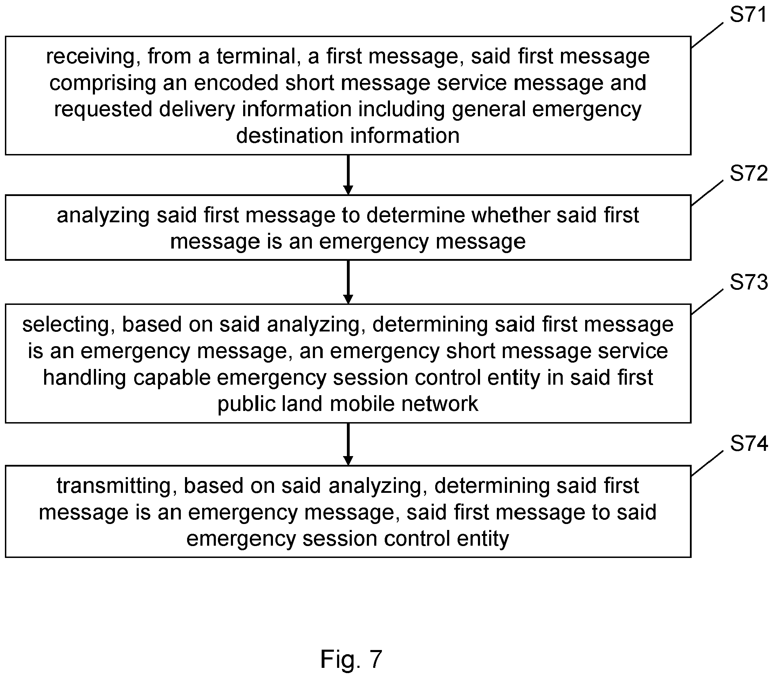

Figure 1 is a block diagram illustrating an apparatus according to example embodiments. The apparatus may be a network node or entity 10 such as a session control entity (e.g. proxy call session control function (P-CSCF)) in a first public land mobile network serving a terminal, the apparatus comprising a receiving circuitry 11, an analyzing circuitry 12, a selecting circuitry 13, and a transmitting circuitry 14. The receiving circuitry 11 receives, from said terminal, a first message, said first message comprising an encoded short message service message and requested delivery information including general emergency destination information. The analyzing circuitry 12 said first message to determine whether said first message is an emergency message. Based on said analyzing, determining said first message is an emergency message, the selecting circuitry 13 selects emergency session control entity capable of handling emergency short message service messages ("emergency short message service handling capable emergency session control entity") in said first public land mobile network, and the transmitting circuitry 14 transmits said first message to said emergency session control entity. Figure 7 is a schematic diagram of a method according to example embodiments. The apparatus according to Figure 1 may perform the method of Figure 7 but is not limited to this method. The method of Figure 7 may be performed by the apparatus of Figure 1 but is not limited to being performed by this apparatus.

As shown in Figure 7, a method according to example embodiments comprises an operation of receiving (S71), from said terminal, a first message, said first message comprising an encoded short message service message and requested delivery information including general emergency destination information, an operation of analyzing (S72) said first message to determine whether said first message is an emergency message, and based on said analyzing, determining said first message is an emergency message, an operation of selecting (S73) an emergency short message service handling capable emergency session control entity in said first public land mobile network, and an operation of transmitting (S74) said first message to said emergency session control entity.

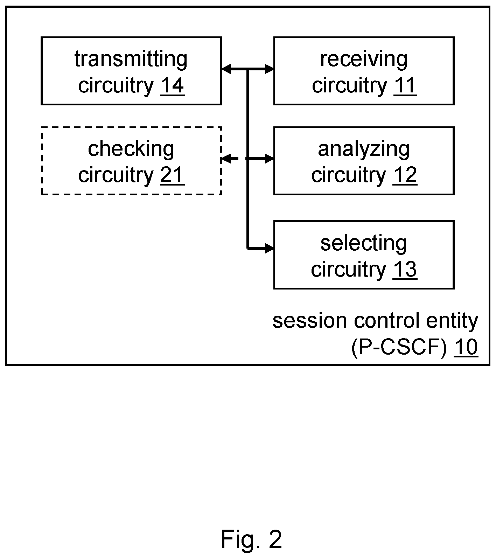

Figure 2 is a block diagram illustrating an apparatus according to example embodiments. In particular, Figure 2 illustrates a variation of the apparatus shown in Figure 1. The apparatus according to Figure 2 may thus further comprise a checking circuitry 21.

In an embodiment at least some of the functionalities of the apparatus shown in Figure 1 (or 2) may be shared between two physically separate devices forming one operational entity. Therefore, the apparatus may be seen to depict the operational entity comprising one or more physically separate devices for executing at least some of the described methods.

According to further example embodiments, said analyzing operation (S72) further comprises at least one of an operation of checking said requested delivery information for being indicative of said general emergency destination information and an operation of checking said short message service message for being an emergency short message service message.

According to further example embodiments, said first message is a session initiation protocol message.

According to further example embodiments, said requested delivery information is a request uniform resource identifier.

According to further example embodiments, said general emergency destination information is at least one of an emergency telephone number and an emergency session initiation protocol uniform resource identifier.

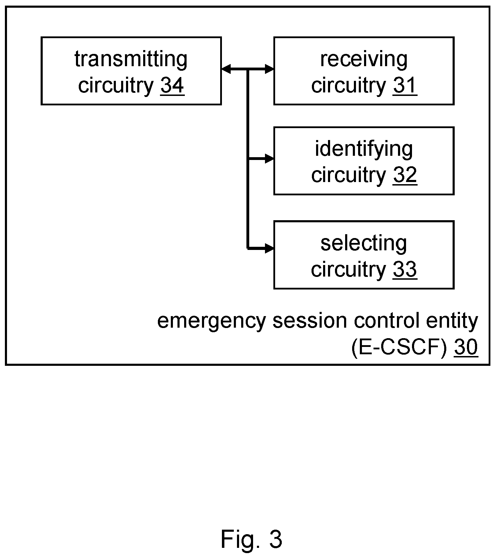

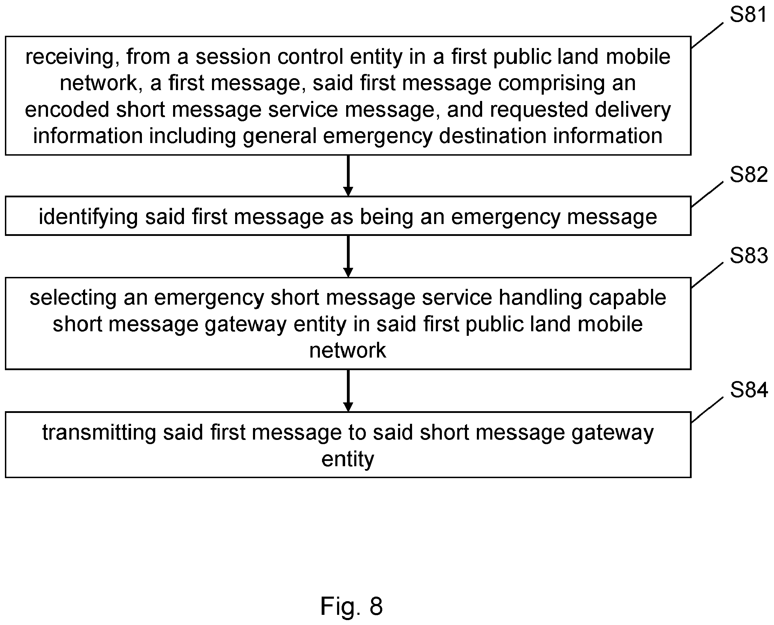

Figure 3 is a block diagram illustrating an apparatus according to example embodiments. The apparatus may be a network node or entity 30 such as an emergency session control entity (e.g. an entity comprising emergency call session control function (E-CSCF)) in a first public land mobile network serving a terminal, the apparatus comprising a receiving circuitry 31, an identifying circuitry 32, a selecting circuitry 33, and a transmitting circuitry 34. The receiving circuitry 31 receives, from a session control entity in said first public land mobile network, a first message, said first message comprising an encoded short message service message, and requested delivery information including general emergency destination information. The identifying circuitry 32 identifies said first message as being an emergency message. The selecting circuitry 33 selects an emergency short message service handling capable short message gateway entity in said first public land mobile network. The transmitting circuitry 34 transmits said first message to said short message gateway entity. Figure 8 is a schematic diagram of a method according to example embodiments. The apparatus according to Figure 3 may perform the method of Figure 8 but is not limited to this method. The method of Figure 8 may be performed by the apparatus of Figure 3 but is not limited to being performed by this apparatus.

As shown in Figure 8, a method according to example embodiments comprises an operation of receiving (S81), from a session control entity in said first public land mobile network, a first message, said first message comprising an encoded short message service message, and requested delivery information including general emergency destination information, an operation of identifying (S82) said first message as being an emergency message, an operation of selecting (S83) an emergency short message service handling capable short message gateway entity in said first public land mobile network, and an operation of transmitting (S84) said first message to said short message gateway entity.

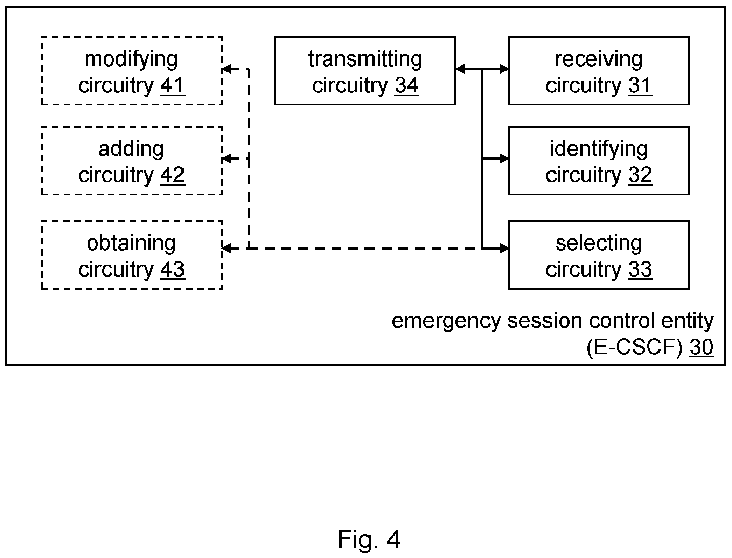

Figure 4 is a block diagram illustrating an apparatus according to example embodiments. In particular, Figure 4 illustrates a variation of the apparatus shown in Figure 3. The apparatus according to Figure 4 may thus further comprise a modifying circuitry 41, an adding circuitry 42, and/or an obtaining circuitry 43.

In an embodiment at least some of the functionalities of the apparatus shown in Figure 3 (or 4) may be shared between two physically separate devices forming one operational entity. Therefore, the apparatus may be seen to depict the operational entity comprising one or more physically separate devices for executing at least some of the described processes.

According to a variation of the procedure shown in Figure 8, exemplary additional operations are given, which are inherently independent from each other as such. According to such variation, an exemplary method according to example embodiments may comprise an operation of modifying said requested delivery information of said first message to include specific emergency destination information of a specific public safety answering point.

According to further example embodiments, said modifying operation is based on a location of said terminal.

According to further example embodiments, said specific emergency destination information is at least one of a telephone number and a session initiation protocol uniform resource identifier.

According to further example embodiments, said specific emergency destination information is specific public safety answering point contact information of said specific public safety answering point.

According to further example embodiments, said first message is a session initiation protocol message.

According to further example embodiments, said requested delivery information is a request uniform resource identifier.

According to further example embodiments, said general emergency destination information is at least one of an emergency telephone number and an emergency session initiation protocol uniform resource identifier.

According to a variation of the procedure shown in Figure 8, exemplary additional operations are given, which are inherently independent from each other as such. According to such variation, an exemplary method according to example embodiments may comprise an operation of adding information indicative of a location of said terminal to said first message.

According to a variation of the procedure shown in Figure 8, exemplary additional operations are given, which are inherently independent from each other as such. According to such variation, an exemplary method according to example embodiments may comprise an operation of obtaining information indicative of a location of said terminal from a location retrieval entity in said first public land mobile network.

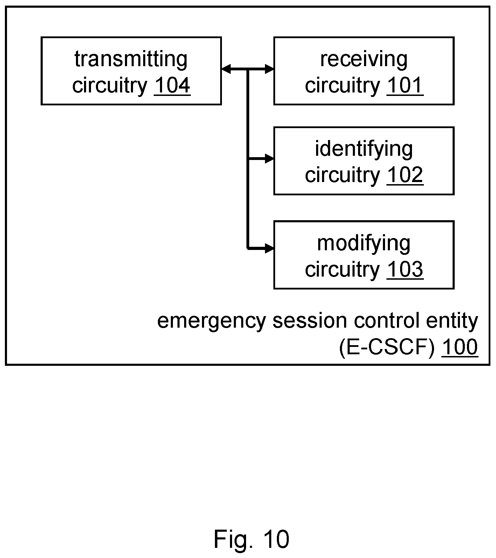

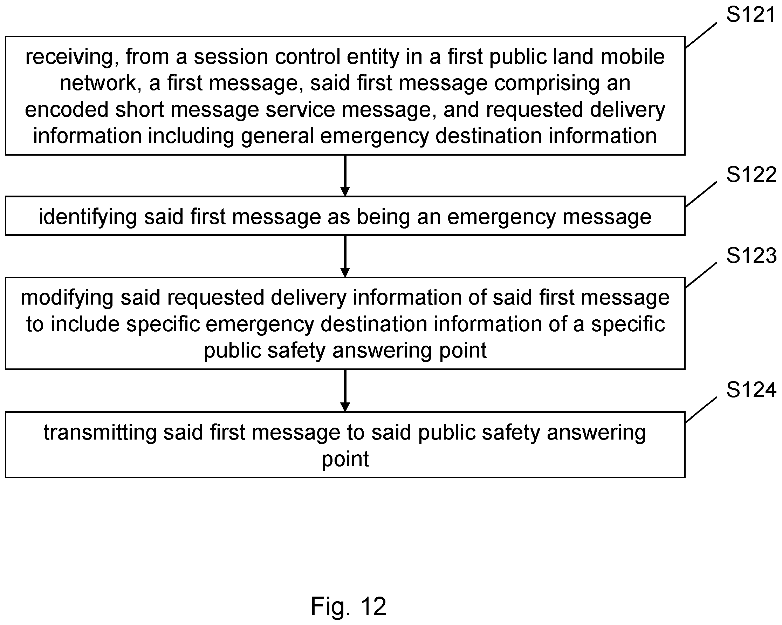

Figure 10 is a block diagram illustrating an apparatus according to example embodiments. The apparatus may be a network node or entity 100 such as an emergency session control entity (e.g. an entity comprising emergency call session control function (E-CSCF)) in a first public land mobile network serving a terminal, the apparatus comprising a receiving circuitry 101, an identifying circuitry 102, a modifying circuitry 103, and a transmitting circuitry 104. The receiving circuitry 101 receives, from a session control entity in said first public land mobile network, a first message, said first message comprising an encoded short message service message, and requested delivery information including general emergency destination information. The identifying circuitry 102 identifies said first message as being an emergency message. The modifying circuitry 103 modifies said requested delivery information of said first message to include specific emergency destination information of a specific public safety answering point. The transmitting circuitry 104 transmits said first message to said public safety answering point. Figure 12 is a schematic diagram of a method according to example embodiments. The apparatus according to Figure 10 may perform the method of Figure 12 but is not limited to this method. The method of Figure 12 may be performed by the apparatus of Figure 10 but is not limited to being performed by this apparatus.

As shown in Figure 12, a method according to example embodiments comprises an operation of receiving (S121), from a session control entity in said first public land mobile network, a first message, said first message comprising an encoded short message service message, and requested delivery information including general emergency destination information, an operation of identifying (S122) said first message as being an emergency message, an operation of modifying (S123) said requested delivery information of said first message to include specific emergency destination information of a specific public safety answering point, and an operation of transmitting (S124) said first message to said public safety answering point.

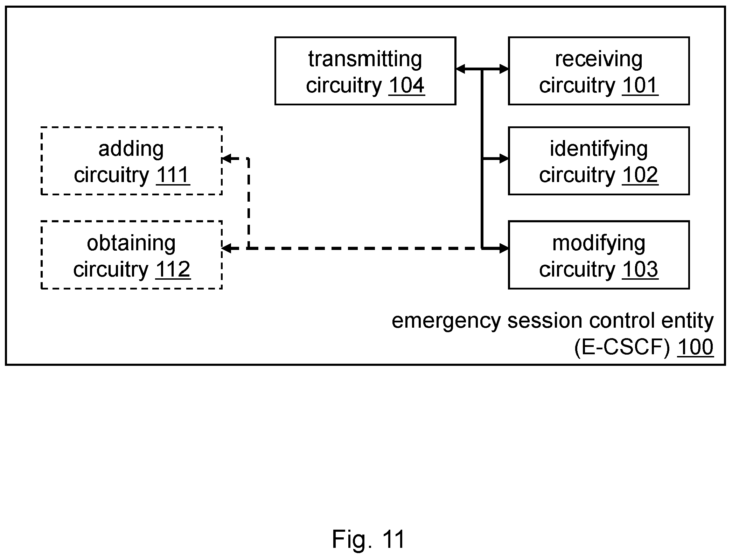

Figure 11 is a block diagram illustrating an apparatus according to example embodiments. In particular, Figure 11 illustrates a variation of the apparatus shown in Figure 10. The apparatus according to Figure 11 may thus further comprise an adding circuitry 111 and/or an obtaining circuitry 112.

In an embodiment at least some of the functionalities of the apparatus shown in Figure 10 (or 11) may be shared between two physically separate devices forming one operational entity. Therefore, the apparatus may be seen to depict the operational entity comprising one or more physically separate devices for executing at least some of the described processes.

According to further example embodiments, said modifying operation (S123) is based on a location of said terminal.

According to further example embodiments, said specific emergency destination information is at least one of a telephone number and a session initiation protocol uniform resource identifier.

According to further example embodiments, said specific emergency destination information is specific public safety answering point contact information of said specific public safety answering point.

According to further example embodiments, said first message is a session initiation protocol message.

According to further example embodiments, said requested delivery information is a request uniform resource identifier.

According to further example embodiments, said general emergency destination information is at least one of an emergency telephone number and an emergency session initiation protocol uniform resource identifier.

According to a variation of the procedure shown in Figure 12, exemplary additional operations are given, which are inherently independent from each other as such. According to such variation, an exemplary method according to example embodiments may comprise an operation of adding information indicative of a location of said terminal to said first message.

According to a variation of the procedure shown in Figure 12, exemplary additional operations are given, which are inherently independent from each other as such. According to such variation, an exemplary method according to example embodiments may comprise an operation of obtaining information indicative of a location of said terminal from a location retrieval entity in said first public land mobile network.

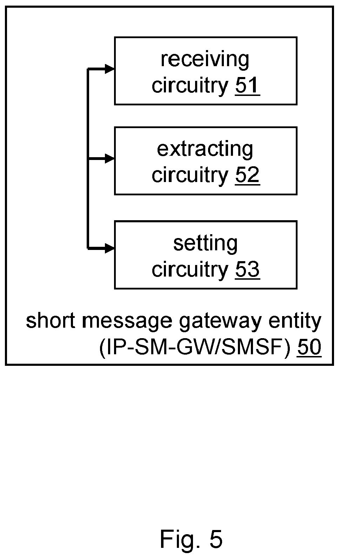

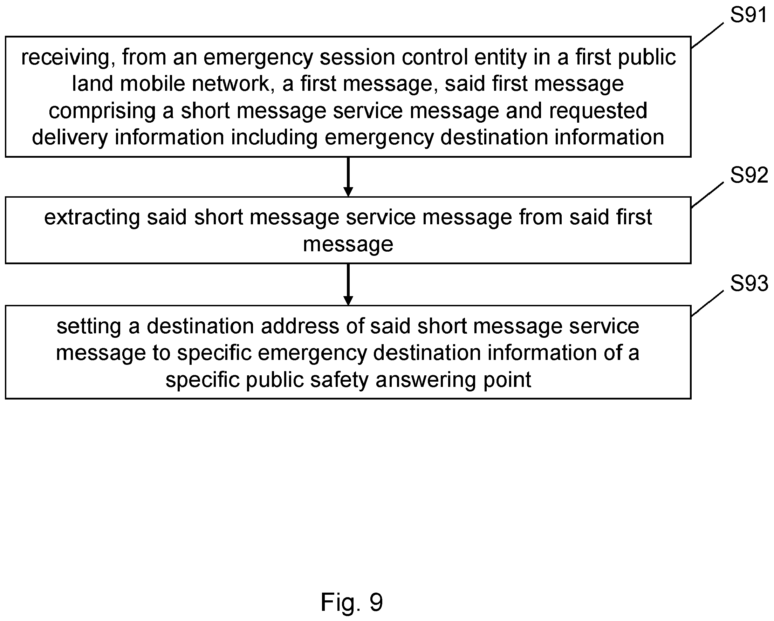

Figure 5 is a block diagram illustrating an apparatus according to example embodiments. The apparatus may be a network node or entity 50 such as a short message gateway entity (e.g. internet protocol short message gateway (IP-SM-GW), short message service function (SMSF)) in a first public land mobile network serving a terminal, the apparatus comprising a receiving circuitry 51, an extracting circuitry 52, and a setting circuitry 53. The receiving circuitry 51 receives, from an emergency session control entity in said first public land mobile network, a first message, said first message comprising a short message service message and requested delivery information including emergency destination information. The extracting circuitry 52 extracts said short message service message from said first message. The setting circuitry 53 sets a destination address of said short message service message to specific emergency destination information of a specific public safety answering point. Figure 9 is a schematic diagram of a method according to example embodiments. The apparatus according to Figure 5 may perform the method of Figure 9 but is not limited to this method. The method of Figure 9 may be performed by the apparatus of Figure 5 but is not limited to being performed by this apparatus.

As shown in Figure 9, a method according to example embodiments comprises an operation of receiving (S91), from an emergency session control entity in said first public land mobile network, a first message, said first message comprising a short message service message and requested delivery information including emergency destination information, an operation of extracting (S92) said short message service message from said first message, and an operation of setting (S93) a destination address of said short message service message to specific emergency destination information of a specific public safety answering point.

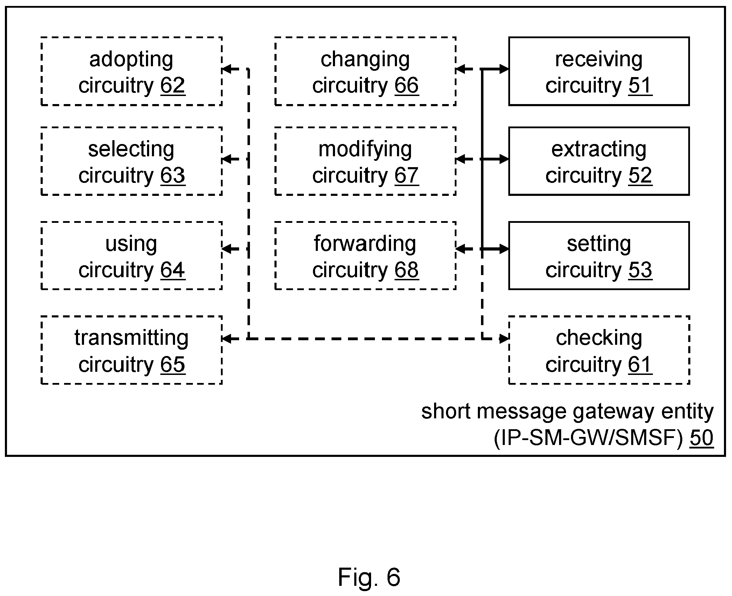

Figure 6 is a block diagram illustrating an apparatus according to example embodiments. In particular, Figure 6 illustrates a variation of the apparatus shown in Figure 5. The apparatus according to Figure 6 may thus further comprise a checking circuitry 61, an adopting circuitry 62, a selecting circuitry 63, a using circuitry 64, a transmitting circuitry 65, a changing circuitry 66, a modifying circuitry 67, and/or a forwarding circuitry 68.

In an embodiment at least some of the functionalities of the apparatus shown in Figure 5 (or 6) may be shared between two physically separate devices forming one operational entity. Therefore, the apparatus may be seen to depict the operational entity comprising one or more physically separate devices for executing at least some of the described processes.

According to further example embodiments, said first message is a session initiation protocol message.

According to further example embodiments, said requested delivery information is a request uniform resource identifier.

According to further example embodiments, said emergency destination information is at least one of a first telephone number and a first session initiation protocol uniform resource identifier.

According to further example embodiments, said specific emergency destination information is at least one of a second telephone number and a second emergency session initiation protocol uniform resource identifier.

According to further example embodiments, said specific emergency destination information is specific public safety answering point contact information of said specific public safety answering point.

According to further example embodiments, said setting operation (S93) further comprises an operation of checking whether said emergency destination information is specific emergency destination information for said specific public safety answering point, and based on said emergency destination information being said specific emergency destination information for said specific public safety answering point, an operation of adopting said emergency destination information as said specific emergency destination information.

According to further example embodiments, said setting operation (S93) further comprises an operation of selecting said specific public safety answering point based on a location of said terminal and an operation of using emergency destination information corresponding to said selected specific public safety answering point as said specific emergency destination information.

According to a variation of the procedure shown in Figure 9, exemplary additional operations are given, which are inherently independent from each other as such. According to such variation, an exemplary method according to example embodiments may comprise an operation of selecting a short message service center entity in said first public land mobile network, and an operation of transmitting said short message service message to said short message service center entity.

According to a variation of the procedure shown in Figure 9, exemplary additional operations are given, which are inherently independent from each other as such. According to such variation, an exemplary method according to example embodiments may comprise an operation of changing a short message service center address of said short message service message to an address of said short message service center entity.

According to further example embodiments, said selecting operation (selecting said short message service center entity in said first public land mobile network) is based on availability of an emergency short message service handling destined emergency session control entity in said first public land mobile network such that, if said emergency short message service handling destined emergency session control entity is available in said first public land mobile network, said emergency short message service handling destined emergency session control entity is selected as said short message service center entity in said first public land mobile network.

According to a variation of the procedure shown in Figure 9, exemplary additional operations are given, which are inherently independent from each other as such. According to such variation, an exemplary method according to example embodiments may comprise an operation of modifying said requested delivery information of said first message to include said specific emergency destination information, and an operation of forwarding said first message to said specific public safety answering point based on said specific emergency destination information.

Example embodiments outlined and specified above are explained below in more specific terms.

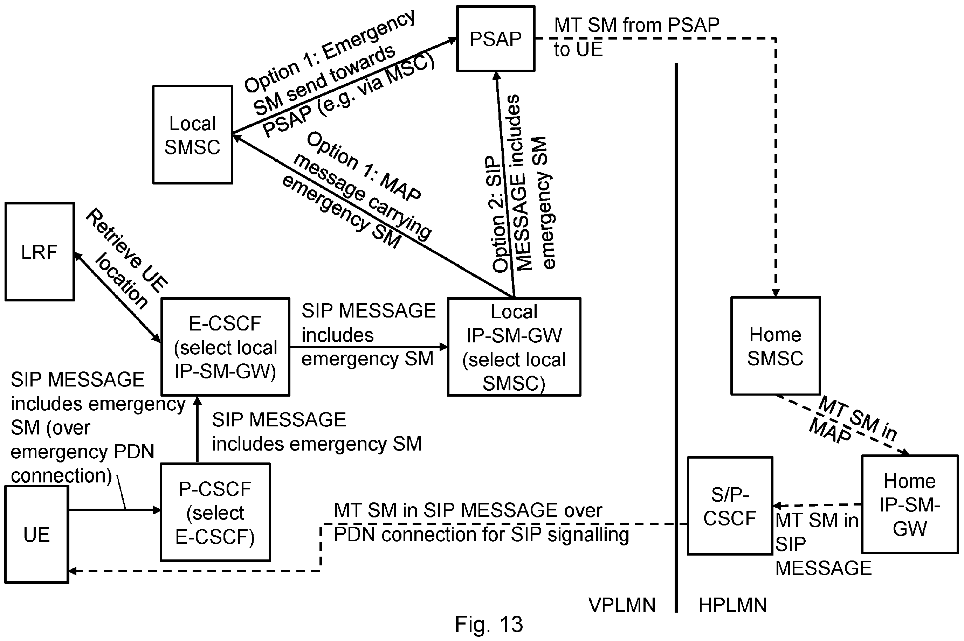

Figure 13 shows a schematic diagram of an example of an environment comprising a HPLMN and VPLMN according to example embodiments, and in particular illustrates an example SIP message call flow for a mobile originated (MO) emergency SMS message from a UE to a PSAP (emergency request URI or emergency number) and for a mobile terminated (MT) SMS message from the PSAP to the UE according to example embodiments.

The scenario considered for explanation of example embodiments involves that a roaming UE needs to send an emergency SMS message. Heretofore, the UE request establishment of an emergency PDN connection and may send an IMS emergency REGISTER to the IMS (if not already registered) in the PLMN.

As illustrated in Figure 13, subsequently, the UE sends an emergency SMS message. To do so, the UE initiates a SIP MESSAGE which contains the emergency SMS message in a body of the SIP MESSAGE. According to example embodiments, the SIP MESSAGE has a R-URI which is set to an emergency URI. The emergency SMS message may be encoded as per existing TS 24.011, i.e., Service Center address is set to the address configured in the UE, the terminating party information is set to an emergency number e.g., "112".

As further illustrated in Figure 13, according to example embodiments, the P-CSCF receives the SIP MESSAGE, recognizes that the R-URI comprises an emergency URI, and hence forwards or routes the SIP MESSAGE to an appropriate E-CSCF that is capable of handling emergency SMS messages.

As further illustrated in Figure 13, according to example embodiments, the E-CSCF receives the SIP MESSAGE, and identifies that the SIP MESSAGE contains an emergency SMS message. The request URI of the SIP MESSAGE is changed to an appropriate address identifier of a PSAP being capable of handling emergency SMS messages. According to further example embodiments, the E-CSCF invokes an LRF in the PLMN to retrieve the location data indicative of the UE location. According to still further example embodiments, the E-CSCF selects an IP-SM-GW that is capable of handling emergency SMS messages and forwards or rotues the SIP MESSAGE to the IP-SM-GW.

As further illustrated in Figure 13, the IP-SM-GW receives the SIP MESSAGE including the encoded emergency SMS message. According to example embodiments, the IP-SM-GW extracts the emergency SMS message from the SIP message, and sets the destination address in the TP layer to the address of the PSAP capable to handle emergency short messages ("PSAP address") as received in the R-URI of the SIP MESSAGE. According to further example embodiments, the IP-SM-GW changes the request URI of the SIP MESSAGE to the address of a PSAP. Further, according to example embodiments, the emergency SMS message is forwarded or routed to a local SMSC in the visited public land mobile network, and also the address of the SMSC in the emergency SMS message is changed to the address of the local SMSC. According to further example embodiments, the IP-SM-GW forwards the SMS directly to the PSAP via a SIP MESSAGE.

Finally, according to example embodiments, the emergency SMS message is sent by the IP-SM-GW via MAP to the local SMSC and from there to the PSAP.

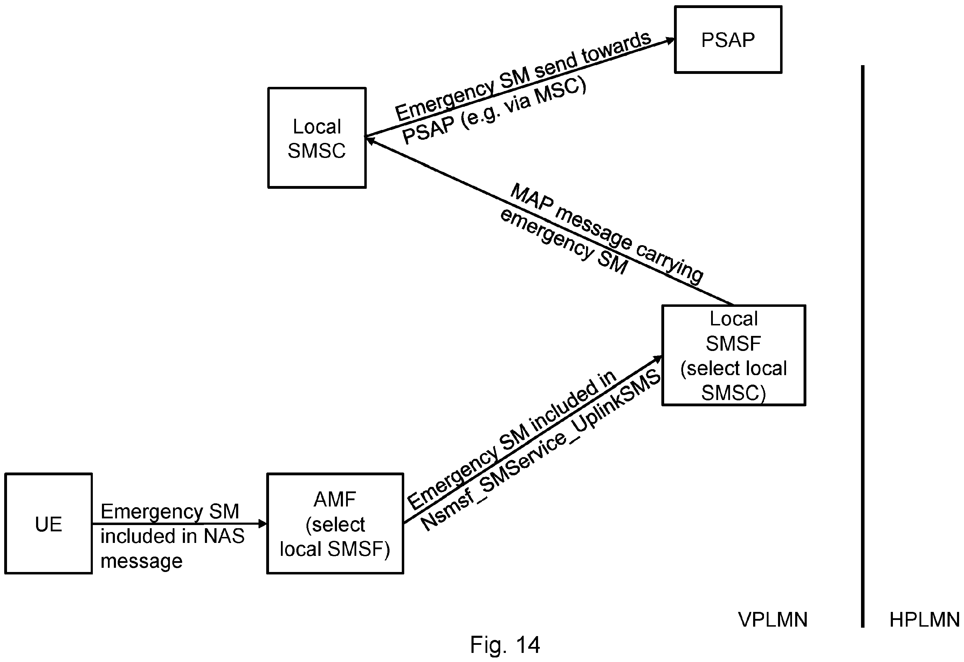

Figure 14 shows a schematic diagram of an example of environment comprising a HPLMN and a VLPMN according to example embodiments, and in particular illustrates an example message flow for an MO emergency SM sent via non-access stratum (NAS) to an AMF (in 5G) according to example embodiments.

As illustrated in Figure 14, in case of SMS over NAS, in 5G, the AMF and the SMS function (SMSF) are both always in the serving PLMN which can be the HPLMN or, in roaming case, a VPLMN. According to example embodiments, the UE encapsulates the short message in an NAS message (uplink NAS transport message) towards the AMF with an indication indicating that the NAS message is for emergency SMS transporting.

According to example embodiments, the AMF, when receiving a NAS message with an indication indicating that the NAS message is for emergency SMS transporting, selects a SMSF in the serving PLMN that is capable to handle emergency short messages, and sends the emergency short message to this SMSF indicating that the short message is an emergency short message. The SMSF receives the emergency short message, selects a SMSC in the serving network that is capable to handle emergency short messages and changes the relay protocol destination address in the short message to the selected SMSC address. Finally, the SMSF forwards the emergency short message to this SMSC which in turn forwards the emergency short message to a PSAP based on the information in the transfer protocol destination address.

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, i.e. network node or entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

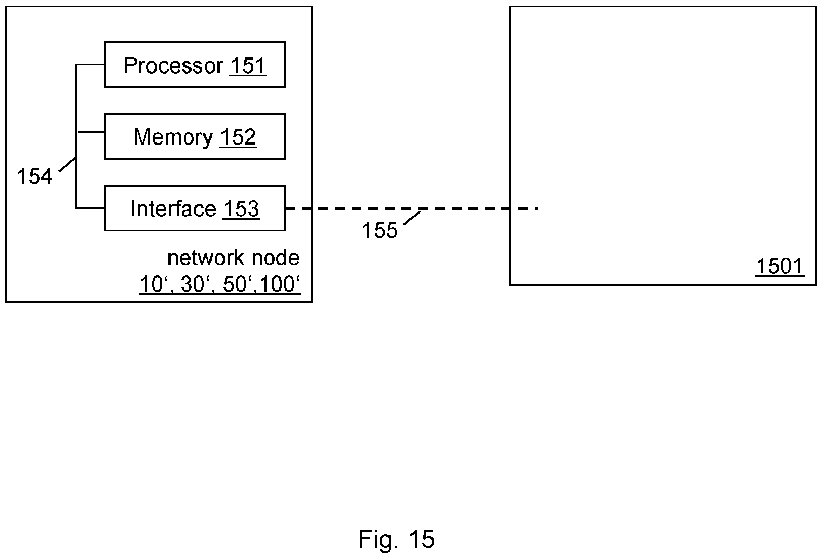

In Figure 15, an alternative illustration of apparatuses according to example embodiments is depicted. As indicated in Figure 15, according to example embodiments, the apparatus (network node) 10', 30', 50', 100' (corresponding to the network node 10, 30, 50, 100) comprises a processor 151, a memory 152 and an interface 153, which are connected by a bus 154 or the like. The apparatuses 10', 30', 50', 100' may be connected to another apparatus 1501 (an interface thereof) via link 155, respectively. According to example embodiments, the another apparatus 1501 may be another one of the apparatuses 10', 30', 50', 100'.

The processor 151 and/or the interface 153 may also include a modem or the like to facilitate communication over a (hardwire or wireless) link, respectively. The interface 153 may include a suitable transceiver coupled to one or more antennas or communication means for (hardwire or wireless) communications with the linked or connected device(s), respectively. The interface 153 is generally configured to communicate with at least one other apparatus, i.e. the interface thereof.

The memory 152 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the network node or entity 10 (e.g. session control entity in a first public land mobile network serving a terminal) comprises at least one processor 151, at least one memory 152 including computer program code, and at least one interface 153 configured for communication with at least another apparatus. The processor (i.e. the at least one processor 151, with the at least one memory 152 and the computer program code) is configured to perform receiving, from said terminal, a first message, said first message comprising an encoded short message service message and requested delivery information including general emergency destination information (thus the apparatus comprising corresponding means for receiving), to perform analyzing said first message to determine whether said first message is an emergency message (thus the apparatus comprising corresponding means for analyzing), to perform selecting, based on said analyzing, determining said first message is an emergency message, an emergency short message service handling capable emergency session control entity in said first public land mobile network (thus the apparatus comprising corresponding means for selecting), and to perform transmitting, based on said analyzing, determining said first message is an emergency message, said first message to said emergency session control entity (thus the apparatus comprising corresponding means for transmitting).

According to example embodiments, an apparatus representing the network node or entity 30 (e.g. emergency session control entity in a first public land mobile network serving a terminal) comprises at least one processor 151, at least one memory 152 including computer program code, and at least one interface 153 configured for communication with at least another apparatus. The processor (i.e. the at least one processor 151, with the at least one memory 152 and the computer program code) is configured to perform receiving, from a session control entity in said first public land mobile network, a first message, said first message comprising an encoded short message service message, and requested delivery information including general emergency destination information (thus the apparatus comprising corresponding means for receiving), to perform identifying said first message as being an emergency message (thus the apparatus comprising corresponding means for identifying), to perform selecting an emergency short message service handling capable short message gateway entity in said first public land mobile network (thus the apparatus comprising corresponding means for selecting), and to perform transmitting said first message to said short message gateway entity (thus the apparatus comprising corresponding means for transmitting).

According to example embodiments, an apparatus representing the network node or entity 100 (e.g. emergency session control entity in a first public land mobile network serving a terminal) comprises at least one processor 151, at least one memory 152 including computer program code, and at least one interface 153 configured for communication with at least another apparatus. The processor (i.e. the at least one processor 151, with the at least one memory 152 and the computer program code) is configured to perform receiving, from a session control entity in said first public land mobile network, a first message, said first message comprising an encoded short message service message, and requested delivery information including general emergency destination information (thus the apparatus comprising corresponding means for receiving), to perform identifying said first message as being an emergency message (thus the apparatus comprising corresponding means for identifying), to perform modifying said requested delivery information of said first message to include specific emergency destination information of a specific public safety answering point (thus the apparatus comprising corresponding means for modifying), and to perform transmitting said first message to said public safety answering point (thus the apparatus comprising corresponding means for transmitting).

According to example embodiments, an apparatus representing the network node or entity 50 (e.g. short message gateway entity in a first public land mobile network serving a terminal) comprises at least one processor 151, at least one memory 152 including computer program code, and at least one interface 153 configured for communication with at least another apparatus. The processor (i.e. the at least one processor 151, with the at least one memory 152 and the computer program code) is configured to perform receiving, from an emergency session control entity in said first public land mobile network, a first message, said first message comprising a short message service message and requested delivery information including emergency destination information (thus the apparatus comprising corresponding means for receiving), to perform extracting said short message service message from said first message (thus the apparatus comprising corresponding means for extracting), and to perform setting a destination address of said short message service message to specific emergency destination information of a specific public safety answering point (thus the apparatus comprising corresponding means for setting).

For further details regarding the operability/functionality of the individual apparatuses, reference is made to the above description in connection with any one of Figures 1 to 14, respectively.

For the purpose of the present disclosure as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for support of emergency short message service messages. Such measures exemplarily comprise, at a session control entity in a first public land mobile network serving a terminal, receiving, from said terminal, a first message, said first message comprising an encoded short message service message and requested delivery information including general emergency destination information, analyzing said first message to determine whether said first message is an emergency message, and based on said analyzing, determining said first message is an emergency message, selecting an emergency short message service handling capable emergency session control entity in said first public land mobile network, and transmitting said first message to said emergency session control entity and further on to an emergency short message capable IP short message gateway.

Even though the disclosure is described above with reference to the examples according to the accompanying drawings, it is to be understood that the disclosure is not restricted thereto. Rather, it is apparent to those skilled in the art that the present disclosure can be modified in many ways without departing from the scope of the inventive idea as disclosed herein.

Among others, following Items are disclosed by the above description and explanations:
Item 1. A method of a session control entity in a first public land mobile network serving a terminal, said method comprising
   receiving, from said terminal, a first message, said first message comprising an encoded short message service message and requested delivery information including general emergency destination information,
   analyzing said first message to determine whether said first message is an emergency message, and
   based on said analyzing, determining said first message is an emergency message,
      selecting an emergency short message service handling capable emergency session control entity in said first public land mobile network, and
      transmitting said first message to said emergency session control entity.
Item 2. The method according to Item 1, wherein
   said analyzing further comprises at least one of:
   checking said requested delivery information for being indicative of said general emergency destination information, and
   checking said short message service message for being an emergency short message service message.
Item 3. The method according to Item 1 or 2, wherein
   said first message is a session initiation protocol message, and/or
   said requested delivery information is a request uniform resource identifier, and/or
   said general emergency destination information is at least one of an emergency telephone number and an emergency session initiation protocol uniform resource identifier.
Item 4. A method of an emergency session control entity in a first public land mobile network serving a terminal, said method comprising
   receiving, from a session control entity in said first public land mobile network, a first message, said first message comprising an encoded short message service message, and requested delivery information including general emergency destination information,
   identifying said first message as being an emergency message,
   selecting an emergency short message service handling capable short message gateway entity in said first public land mobile network, and
   transmitting said first message to said short message gateway entity.
Item 5. The method according to Item 4, further comprising
   modifying said requested delivery information of said first message to include specific emergency destination information of a specific public safety answering point.
Item 6. A method of an emergency session control entity in a first public land mobile network serving a terminal, said method comprising
   receiving, from a session control entity in said first public land mobile network, a first message, said first message comprising an encoded short message service message, and requested delivery information including general emergency destination information,
   identifying said first message as being an emergency message,
   modifying said requested delivery information of said first message to include specific emergency destination information of a specific public safety answering point, and
   transmitting said first message to said public safety answering point.
Item 7. The method according to Item 5 or 6, wherein
   said modifying is based on a location of said terminal.
Item 8. The method according to any of Items 5 to 7, wherein
   said specific emergency destination information is at least one of a telephone number and a session initiation protocol uniform resource identifier, and/or
   said specific emergency destination information is specific public safety answering point contact information of said specific public safety answering point.
Item 9. The method according to any of Items 4 to 8, wherein
   said first message is a session initiation protocol message, and/or
   said requested delivery information is a request uniform resource identifier, and/or
   said general emergency destination information is at least one of an emergency telephone number and an emergency session initiation protocol uniform resource identifier.
Item 10. The method according to any of Items 4 to 9, further comprising
   adding information indicative of a location of said terminal to said first message.
Item 11. The method according to any of Items 4 to 10, further comprising
   obtaining information indicative of a location of said terminal from a location retrieval entity in said first public land mobile network.
Item 12. A method of a short message gateway entity in a first public land mobile network serving a terminal, said method comprising
   receiving, from an emergency session control entity in said first public land mobile network, a first message, said first message comprising a short message service message and requested delivery information including emergency destination information,
   extracting said short message service message from said first message, and
   setting a destination address of said short message service message to specific emergency destination information of a specific public safety answering point.
Item 13. The method according to Item 12, wherein
   said first message is a session initiation protocol message, and/or
   said requested delivery information is a request uniform resource identifier, and/or
   said emergency destination information is at least one of a first telephone number and a first session initiation protocol uniform resource identifier, and/or
   said specific emergency destination information is at least one of a second telephone number and a second emergency session initiation protocol uniform resource identifier, and/or
   said specific emergency destination information is specific public safety answering point contact information of said specific public safety answering point.
Item 14. The method according to Item 12 or 13, wherein
   said setting further comprises
   checking whether said emergency destination information is specific emergency destination information for said specific public safety answering point, and
   based on said emergency destination information being said specific emergency destination information for said specific public safety answering point, adopting said emergency destination information as said specific emergency destination information.
Item 15. The method according to Item 12 or 13, wherein
   said setting further comprises
   selecting said specific public safety answering point based on a location of said terminal, and
   using emergency destination information corresponding to said selected specific public safety answering point as said specific emergency destination information.
Item 16. The method according to any of Items 12 to 15, further comprising
   selecting a short message service center entity in said first public land mobile network, and
   transmitting said short message service message to said short message service center entity.
Item 17. The method according to Item 16, further comprising
   changing a short message service center address of said short message service message to an address of said short message service center entity.
Item 18. The method according to Item 16 or 17, wherein
   said selecting said short message service center entity in said first public land mobile network is based on availability of an emergency short message service handling destined emergency session control entity in said first public land mobile network such that, if said emergency short message service handling destined emergency session control entity is available in said first public land mobile network, said emergency short message service handling destined emergency session control entity is selected as said short message service center entity in said first public land mobile network.
Item 19. The method according to any of Items 12 to 18, further comprising
   modifying said requested delivery information of said first message to include said specific emergency destination information, and
   forwarding said first message to said specific public safety answering point based on said specific emergency destination information.
Item 20. An apparatus of a session control entity in a first public land mobile network serving a terminal, said apparatus comprising
   receiving circuitry configured to receive, from said terminal, a first message, said first message comprising an encoded short message service message and requested delivery information including general emergency destination information,
   analyzing circuitry configured to receive said first message to determine whether said first message is an emergency message, and
   based on said analyzing, determining said first message is an emergency message,
      selecting circuitry configured to select an emergency short message service handling capable emergency session control entity in said first public land mobile network, and
      transmitting circuitry configured to transmit said first message to said emergency session control entity.
Item 21. The apparatus according to Item 20, further comprising
   checking circuitry configured to
   check said requested delivery information for being indicative of said general emergency destination information, and to
   check said short message service message for being an emergency short message service message.
Item 22. The apparatus according to Item 20 or 21, wherein
   said first message is a session initiation protocol message, and/or
   said requested delivery information is a request uniform resource identifier, and/or
   said general emergency destination information is at least one of an emergency telephone number and an emergency session initiation protocol uniform resource identifier.
Item 23. An apparatus of an emergency session control entity in a first public land mobile network serving a terminal, said apparatus comprising
   receiving circuitry configured to receive, from a session control entity in said first public land mobile network, a first message, said first message comprising an encoded short message service message, and requested delivery information including general emergency destination information,
   identifying circuitry configured to identify said first message as being an emergency message,
   selecting circuitry configured to select an emergency short message service handling capable short message gateway entity in said first public land mobile network, and
   transmitting circuitry configured to transmit said first message to said short message gateway entity.
Item 24. The apparatus according to Item 23, further comprising
   modifying circuitry configured to modify said requested delivery information of said first message to include specific emergency destination information of a specific public safety answering point.
Item 25. An apparatus of an emergency session control entity in a first public land mobile network serving a terminal, said apparatus comprising
   receiving circuitry configured to receive, from a session control entity in said first public land mobile network, a first message, said first message comprising an encoded short message service message, and requested delivery information including general emergency destination information,
   identifying circuitry configured to identify said first message as being an emergency message,
   modifying circuitry configured to modify said requested delivery information of said first message to include specific emergency destination information of a specific public safety answering point, and
   transmitting circuitry configured to transmit said first message to said public safety answering point.
Item 26. The apparatus according to Item 24 or 25, wherein
   said modifying is based on a location of said terminal.
Item 27. The apparatus according to any of Items 24 to 26, wherein
   said specific emergency destination information is at least one of a telephone number and a session initiation protocol uniform resource identifier, and/or
   said specific emergency destination information is specific public safety answering point contact information of said specific public safety answering point.
Item 28. The apparatus according to any of Items 23 to 27, wherein
   said first message is a session initiation protocol message, and/or
   said requested delivery information is a request uniform resource identifier, and/or
   said general emergency destination information is at least one of an emergency telephone number and an emergency session initiation protocol uniform resource identifier.
Item 29. The apparatus according to any of Items 23 to 28, further comprising
   adding circuitry configured to add information indicative of a location of said terminal to said first message.
Item 30. The apparatus according to any of Items 23 to 29, further comprising
   obtaining circuitry configured to obtain information indicative of a location of said terminal from a location retrieval entity in said first public land mobile network.
Item 31. An apparatus of a short message gateway entity in a first public land mobile network serving a terminal, said apparatus comprising
   receiving circuitry configured to receive, from an emergency session control entity in said first public land mobile network, a first message, said first message comprising a short message service message and requested delivery information including emergency destination information,
   extracting circuitry configured to extract said short message service message from said first message, and
   setting circuitry configured to set a destination address of said short message service message to specific emergency destination information of a specific public safety answering point.
Item 32. The apparatus according to Item 31, wherein
   said first message is a session initiation protocol message, and/or
   said requested delivery information is a request uniform resource identifier, and/or
   said emergency destination information is at least one of a first telephone number and a first session initiation protocol uniform resource identifier, and/or
   said specific emergency destination information is at least one of a second telephone number and a second emergency session initiation protocol uniform resource identifier, and/or
   said specific emergency destination information is specific public safety answering point contact information of said specific public safety answering point.
Item 33. The apparatus according to Item 31 or 32, further comprising
   checking circuitry configured to check whether said emergency destination information is specific emergency destination information for said specific public safety answering point, and
   based on said emergency destination information being said specific emergency destination information for said specific public safety answering point, adopting circuitry configured to adopt said emergency destination information as said specific emergency destination information.
Item 34. The apparatus according to Item 31 or 32, further comprising
   selecting circuitry configured to select said specific public safety answering point based on a location of said terminal, and
   using circuitry configured to use emergency destination information corresponding to said selected specific public safety answering point as said specific emergency destination information.
Item 35. The apparatus according to any of Items 31 to 34, further comprising
   selecting circuitry configured to select a short message service center entity in said first public land mobile network, and
   transmitting circuitry configured to transmit said short message service message to said short message service center entity.
Item 36. The apparatus according to Item 35, further comprising
   changing circuitry configured to change a short message service center address of said short message service message to an address of said short message service center entity.
Item 37. The apparatus according to Item 35 or 36, wherein
   said selecting circuitry is configured to select said short message service center entity in said first public land mobile network based on availability of an emergency short message service handling destined emergency session control entity in said first public land mobile network such that, if said emergency short message service handling destined emergency session control entity is available in said first public land mobile network, said emergency short message service handling destined emergency session control entity is selected as said short message service center entity in said first public land mobile network.
Item 38. The apparatus according to any of Items 31 to 37, further comprising
   modifying circuitry configured to modify said requested delivery information of said first message to include said specific emergency destination information, and
   forwarding circuitry configured to forward said first message to said specific public safety answering point based on said specific emergency destination information.
Item 39. An apparatus of a session control entity in a first public land mobile network serving a terminal, said apparatus comprising
   at least one processor,
   at least one memory including computer program code, and
   at least one interface configured for communication with at least another apparatus,
   the at least one processor, with the at least one memory and the computer program code, being configured to cause the apparatus to perform:
      receiving, from said terminal, a first message, said first message comprising an encoded short message service message and requested delivery information including general emergency destination information,
      analyzing said first message to determine whether said first message is an emergency message, and
      based on said analyzing, determining said first message is an emergency message,
         selecting an emergency short message service handling capable emergency session control entity in said first public land mobile network, and
         transmitting said first message to said emergency session control entity.
Item 40. The apparatus according to Item 39, wherein
   in relation to said analyzing, the at least one processor, with the at least one memory and the computer program code, being configured to cause the apparatus to perform at least one of:
   checking said requested delivery information for being indicative of said general emergency destination information, and
   checking said short message service message for being an emergency short message service message.
Item 41. The apparatus according to Item 39 or 40, wherein
   said first message is a session initiation protocol message, and/or
   said requested delivery information is a request uniform resource identifier, and/or
   said general emergency destination information is at least one of an emergency telephone number and an emergency session initiation protocol uniform resource identifier.
Item 42. An apparatus of an emergency session control entity in a first public land mobile network serving a terminal, said apparatus comprising
   at least one processor,
   at least one memory including computer program code, and
   at least one interface configured for communication with at least another apparatus,
   the at least one processor, with the at least one memory and the computer program code, being configured to cause the apparatus to perform:
      receiving, from a session control entity in said first public land mobile network, a first message, said first message comprising an encoded short message service message, and requested delivery information including general emergency destination information,
      identifying said first message as being an emergency message,
      selecting an emergency short message service handling capable short message gateway entity in said first public land mobile network, and
      transmitting said first message to said short message gateway entity.
Item 43. The apparatus according to Item 42, wherein
   the at least one processor, with the at least one memory and the computer program code, being configured to cause the apparatus to perform:
   modifying said requested delivery information of said first message to include specific emergency destination information of a specific public safety answering point.
Item 44. An apparatus of an emergency session control entity in a first public land mobile network serving a terminal, said apparatus comprising
   at least one processor,
   at least one memory including computer program code, and
   at least one interface configured for communication with at least another apparatus,
   the at least one processor, with the at least one memory and the computer program code, being configured to cause the apparatus to perform:
      receiving, from a session control entity in said first public land mobile network, a first message, said first message comprising an encoded short message service message, and requested delivery information including general emergency destination information,
      identifying said first message as being an emergency message,
      modifying said requested delivery information of said first message to include specific emergency destination information of a specific public safety answering point, and
      transmitting said first message to said public safety answering point.
Item 45. The apparatus according to Item 43 or 44, wherein
   said modifying is based on a location of said terminal.
Item 46. The apparatus according to any of Items 43 to 45, wherein
   said specific emergency destination information is at least one of a telephone number and a session initiation protocol uniform resource identifier, and/or
   said specific emergency destination information is specific public safety answering point contact information of said specific public safety answering point.
Item 47. The apparatus according to any of Items 42 to 46, wherein
   said first message is a session initiation protocol message, and/or
   said requested delivery information is a request uniform resource identifier, and/or
   said general emergency destination information is at least one of an emergency telephone number and an emergency session initiation protocol uniform resource identifier.
Item 48. The apparatus according to any of Items 42 to 47, wherein
   the at least one processor, with the at least one memory and the computer program code, being configured to cause the apparatus to perform:
   adding information indicative of a location of said terminal to said first message.
Item 49. The apparatus according to any of Items 42 to 48, wherein
   the at least one processor, with the at least one memory and the computer program code, being configured to cause the apparatus to perform:
   obtaining information indicative of a location of said terminal from a location retrieval entity in said first public land mobile network.
Item 50. An apparatus of a short message gateway entity in a first public land mobile network serving a terminal, said apparatus comprising
   at least one processor,
   at least one memory including computer program code, and
   at least one interface configured for communication with at least another apparatus,
   the at least one processor, with the at least one memory and the computer program code, being configured to cause the apparatus to perform:
      receiving, from an emergency session control entity in said first public land mobile network, a first message, said first message comprising a short message service message and requested delivery information including emergency destination information,
      extracting said short message service message from said first message, and
      setting a destination address of said short message service message to specific emergency destination information of a specific public safety answering point.
Item 51. The apparatus according to Item 50, wherein
   said first message is a session initiation protocol message, and/or
   said requested delivery information is a request uniform resource identifier, and/or
   said emergency destination information is at least one of a first telephone number and a first session initiation protocol uniform resource identifier, and/or
   said specific emergency destination information is at least one of a second telephone number and a second emergency session initiation protocol uniform resource identifier, and/or
   said specific emergency destination information is specific public safety answering point contact information of said specific public safety answering point.
Item 52. The apparatus according to Item 50 or 51, wherein
   in relation to said setting, the at least one processor, with the at least one memory and the computer program code, being configured to cause the apparatus to perform:
   checking whether said emergency destination information is specific emergency destination information for said specific public safety answering point, and
   based on said emergency destination information being said specific emergency destination information for said specific public safety answering point, adopting said emergency destination information as said specific emergency destination information.
Item 53. The apparatus according to Item 50 or 51, wherein
   in relation to said setting, the at least one processor, with the at least one memory and the computer program code, being configured to cause the apparatus to perform:
   selecting said specific public safety answering point based on a location of said terminal, and
   using emergency destination information corresponding to said selected specific public safety answering point as said specific emergency destination information.
Item 54. The apparatus according to any of Items 50 to 53, wherein
   the at least one processor, with the at least one memory and the computer program code, being configured to cause the apparatus to perform:
   selecting a short message service center entity in said first public land mobile network, and
   transmitting said short message service message to said short message service center entity.
Item 55. The apparatus according to Item 54, wherein
   the at least one processor, with the at least one memory and the computer program code, being configured to cause the apparatus to perform:
   changing a short message service center address of said short message service message to an address of said short message service center entity.
Item 56. The apparatus according to Item 54 or 55, wherein
   the at least one processor, with the at least one memory and the computer program code, being configured to cause the apparatus to perform said selecting said short message service center entity in said first public land mobile network based on availability of an emergency short message service handling destined emergency session control entity in said first public land mobile network such that, if said emergency short message service handling destined emergency session control entity is available in said first public land mobile network, said emergency short message service handling destined emergency session control entity is selected as said short message service center entity in said first public land mobile network.
Item 57. The apparatus according to any of Items 50 to 46, wherein
   the at least one processor, with the at least one memory and the computer program code, being configured to cause the apparatus to perform:
   modifying said requested delivery information of said first message to include said specific emergency destination information, and
   forwarding said first message to said specific public safety answering point based on said specific emergency destination information.
Item 58. A computer program product comprising computer-executable computer program code which, when the program is run on a computer, is configured to cause the computer to carry out the method according to any one of Items 1 to 3, 4 to 11 or 12 to 19.
Item 59. The computer program product according to Item 58, wherein the computer program product comprises a computer-readable medium on which the computer-executable computer program code is stored, and/or wherein the program is directly loadable into an internal memory of the computer or a processor thereof.

### List of acronyms and abbreviations

- 3GPP: 3rd Generation Partnership Project
- 5GC: 5th generation core
- 5GS: 5th generation system
- AMF: access and mobility management function
- CSCF: call session control function
- E-CSCF: emergency call session control function
- EPC: evolved packet core
- EPS: evolved packet system
- ETSI: European Telecommunications Standards Institute
- E-UTRAN: enhanced UMTS terrestrial radio access network
- GSMA: GSM Association
- HPLMN: home public land mobile network
- HSS: home subscriber server
- IMS: internet protocol multimedia subsystem
- IP: internet protocol
- IP-SM-GW: internet protocol short message gateway
- ISIM: internet protocol multimedia services identity module
- LRF: location retrieval function
- LTE: long term evolution
- MAP: mobile application part
- MO: mobile originated
- MSC: mobile (services) switching center
- MSISDN: mobile subscriber integrated services digital network number
- MT: mobile terminated
- NAS: non-access stratum
- NR: new radio
- P-CSCF: proxy call session control function
- PDN: packet data network
- PDU: protocol/packet data unit
- PLMN: public land mobile network
- PSAP: public safety answering point
- RP: relay protocol
- RP-DA: relay protocol destination address
- R-URI: request uniform resource identifier
- S8HR: S8 home routing/routed
- S-CSCF: serving call session control function
- SIM: subscriber identity module
- SIP: session initiation protocol
- SM: short message
- SMS: short message service
- SMSC: short message service center
- SMSF: short message service function
- TP: transfer protocol
- TP-DA: transfer protocol destination address
- UE: user equipment
- URI: uniform resource identifier
- USIM: universal subscriber identity module
- VoLTE: voice over long term evolution
- VoNR: voice over new radio
- VPLMN: visited public land mobile network

## Claims

1. A method of a session control entity in a first public land mobile network serving a terminal, said method comprising
receiving, from said terminal, a first message, said first message comprising an encoded short message service message and requested delivery information including general emergency destination information,
analyzing said first message to determine whether said first message is an emergency message, and
based on said analyzing, determining said first message is an emergency message,
selecting an emergency short message service handling capable emergency session control entity in said first public land mobile network, and
transmitting said first message to said emergency session control entity.

2. The method according to claim 1, wherein
said analyzing further comprises at least one of:
checking said requested delivery information for being indicative of said general emergency destination information, and
checking said short message service message for being an emergency short message service message.

3. The method according to claim 1 or 2, wherein
said first message is a session initiation protocol message, and/or
said requested delivery information is a request uniform resource identifier, and/or
said general emergency destination information is at least one of an emergency telephone number and an emergency session initiation protocol uniform resource identifier.

4. A method of an emergency session control entity in a first public land mobile network serving a terminal, said method comprising
receiving, from a session control entity in said first public land mobile network, a first message, said first message comprising an encoded short message service message, and requested delivery information including general emergency destination information,
identifying said first message as being an emergency message,
selecting an emergency short message service handling capable short message gateway entity in said first public land mobile network, and
transmitting said first message to said short message gateway entity.

5. The method according to claim 4, further comprising
modifying said requested delivery information of said first message to include specific emergency destination information of a specific public safety answering point.

6. A method of an emergency session control entity in a first public land mobile network serving a terminal, said method comprising
receiving, from a session control entity in said first public land mobile network, a first message, said first message comprising an encoded short message service message, and requested delivery information including general emergency destination information,
identifying said first message as being an emergency message,
modifying said requested delivery information of said first message to include specific emergency destination information of a specific public safety answering point, and
transmitting said first message to said public safety answering point.

7. The method according to claim 5 or 6, wherein
said modifying is based on a location of said terminal.

8. The method according to any of claims 5 to 7, wherein
said specific emergency destination information is at least one of a telephone number and a session initiation protocol uniform resource identifier, and/or
said specific emergency destination information is specific public safety answering point contact information of said specific public safety answering point.

9. The method according to any of claims 4 to 8, wherein
said first message is a session initiation protocol message, and/or
said requested delivery information is a request uniform resource identifier, and/or
said general emergency destination information is at least one of an emergency telephone number and an emergency session initiation protocol uniform resource identifier.

10. The method according to any of claims 4 to 9, further comprising
adding information indicative of a location of said terminal to said first message.

11. The method according to any of claims 4 to 10, further comprising
obtaining information indicative of a location of said terminal from a location retrieval entity in said first public land mobile network.

12. A method of a short message gateway entity in a first public land mobile network serving a terminal, said method comprising
receiving, from an emergency session control entity in said first public land mobile network, a first message, said first message comprising a short message service message and requested delivery information including emergency destination information,
extracting said short message service message from said first message, and
setting a destination address of said short message service message to specific emergency destination information of a specific public safety answering point.

13. The method according to claim 12, wherein
said first message is a session initiation protocol message, and/or
said requested delivery information is a request uniform resource identifier, and/or
said emergency destination information is at least one of a first telephone number and a first session initiation protocol uniform resource identifier, and/or
said specific emergency destination information is at least one of a second telephone number and a second emergency session initiation protocol uniform resource identifier, and/or
said specific emergency destination information is specific public safety answering point contact information of said specific public safety answering point.

14. The method according to claim 12 or 13, wherein
said setting further comprises
checking whether said emergency destination information is specific emergency destination information for said specific public safety answering point, and
based on said emergency destination information being said specific emergency destination information for said specific public safety answering point, adopting said emergency destination information as said specific emergency destination information.

15. The method according to claim 12 or 13, wherein
said setting further comprises
selecting said specific public safety answering point based on a location of said terminal, and
using emergency destination information corresponding to said selected specific public safety answering point as said specific emergency destination information.

16. The method according to any of claims 12 to 15, further comprising
selecting a short message service center entity in said first public land mobile network, and
transmitting said short message service message to said short message service center entity.

17. The method according to claim 16, further comprising
changing a short message service center address of said short message service message to an address of said short message service center entity.

18. The method according to claim 16 or 17, wherein
said selecting said short message service center entity in said first public land mobile network is based on availability of an emergency short message service handling destined emergency session control entity in said first public land mobile network such that, if said emergency short message service handling destined emergency session control entity is available in said first public land mobile network, said emergency short message service handling destined emergency session control entity is selected as said short message service center entity in said first public land mobile network.

19. The method according to any of claims 12 to 18, further comprising
modifying said requested delivery information of said first message to include said specific emergency destination information, and
forwarding said first message to said specific public safety answering point based on said specific emergency destination information.

20. An apparatus of a session control entity in a first public land mobile network serving a terminal, said apparatus comprising
receiving circuitry configured to receive, from said terminal, a first message, said first message comprising an encoded short message service message and requested delivery information including general emergency destination information,
analyzing circuitry configured to receive said first message to determine whether said first message is an emergency message, and
based on said analyzing, determining said first message is an emergency message,
selecting circuitry configured to select an emergency short message service handling capable emergency session control entity in said first public land mobile network, and
transmitting circuitry configured to transmit said first message to said emergency session control entity.

21. An apparatus of an emergency session control entity in a first public land mobile network serving a terminal, said apparatus comprising
receiving circuitry configured to receive, from a session control entity in said first public land mobile network, a first message, said first message comprising an encoded short message service message, and requested delivery information including general emergency destination information,
identifying circuitry configured to identify said first message as being an emergency message,
selecting circuitry configured to select an emergency short message service handling capable short message gateway entity in said first public land mobile network, and
transmitting circuitry configured to transmit said first message to said short message gateway entity.

22. An apparatus of an emergency session control entity in a first public land mobile network serving a terminal, said apparatus comprising
receiving circuitry configured to receive, from a session control entity in said first public land mobile network, a first message, said first message comprising an encoded short message service message, and requested delivery information including general emergency destination information,
identifying circuitry configured to identify said first message as being an emergency message,
modifying circuitry configured to modify said requested delivery information of said first message to include specific emergency destination information of a specific public safety answering point, and
transmitting circuitry configured to transmit said first message to said public safety answering point.

23. An apparatus of a short message gateway entity in a first public land mobile network serving a terminal, said apparatus comprising
receiving circuitry configured to receive, from an emergency session control entity in said first public land mobile network, a first message, said first message comprising a short message service message and requested delivery information including emergency destination information,
extracting circuitry configured to extract said short message service message from said first message, and
setting circuitry configured to set a destination address of said short message service message to specific emergency destination information of a specific public safety answering point.
